# DEMANDE DE BREVET EUROPEEN

(11) **EP 4 241 926 A1**
(43) Date de publication de la demande: **13.09.2023**
(21) Numéro de dépôt: 23160320.0
(22) Date de dépôt: 07.03.2023
(51) Int. Cl.: B25G 1/10, B25G 3/24, A21C 11/12, B26B 29/02

(54) **OUTIL DE COUPE, DISPOSITIF DE PROTECTION POUR LEDIT OUTIL DE COUPE ET USTENSILE DE COUPE OBTENU**

(30) Priorité: 07.03.2022 FR 2201925
(71) Demandeur: Scaritech Société par actions simplifiée, 90000 Belfort (FR)
(72) Inventeur: REICHERT, Laurent, 90000 BELFORT (FR)
(74) Mandataire: Cabinet Laurent & Charras

(57) **Abrégé**

L'invention concerne un outil de coupe (1) notamment un outil à scarifier des pâtons (P), ledit outil comportant une lame de coupe (2), un manche (4) disposé dans le prolongement de ladite lame de coupe (2), et un bossage (7) prévu sur ledit manche (4) à distance de ladite lame de coupe et s'étendant sur les faces recto et verso dudit manche (4) pour faciliter la prise en main dudit outil de coupe sur un plan de travail s'il est utilisé seul. L'invention concerne également un dispositif de protection (10') comportant un corps creux longitudinal pourvu d'un rail de guidage (14a) incliné par rapport à la verticale pour recevoir par coulissement ledit outil de coupe (1) et former un ustensile de coupe (100) sécurisé et ergonomique.

## Description

### Domaine technique

La présente invention concerne un outil de coupe, notamment un outil à scarifier des pâtons, ledit outil de coupe comportant une lame de coupe et un manche disposé dans le prolongement de ladite lame de coupe.

La présente invention concerne également un dispositif de protection pour ledit outil de coupe, et un ustensile de coupe obtenu par assemblage dudit dispositif de protection et dudit outil de coupe.

### Technique antérieure

Les outils de coupe ou outils à scarifier sont couramment utilisés dans le domaine de la boulangerie pour effectuer des entailles superficielles, appelées des grignes, dans les pâtons avant leur cuisson, ou dans tout autre morceau de pâte crue et molle. Ces entailles sont indispensables à l'obtention d'un pain de qualité ou de tout autre produit de boulangerie nécessitant ce type d'entailles. En effet, la forme et l'aspect du pain après cuisson dépendent de la qualité des entailles effectuées dans le pâton avant cuisson. Si elles ne sont pas assez profondes, la vapeur d'eau qui se forme lors de la cuisson a du mal à s'évacuer et boursoufle la croûte du pain. Si elles sont trop profondes, la croûte du pain éclate. Dans les deux cas, l'aspect et la forme du pain obtenus nuisent à son esthétique, le pain perdant alors de son attrait pour le consommateur. La qualité de la scarification manuelle est donc totalement liée au savoir-faire du boulanger et à son expérience. Elle est donc aléatoire en fonction de l'expérience du boulanger.

Les outils à scarifier connus peuvent être utilisés manuellement par les boulangers artisans ou automatiquement sur une machine adéquate dans les boulangeries industrielles. La qualité de la scarification est en outre étroitement liée à la finesse et au tranchant de la lame de coupe. Par conséquent, cette lame de coupe doit être régulièrement changée. Plusieurs formes d'outils ont été développées pour se substituer aux lames à rasoir nues dans le but de sécuriser l'utilisation de ces lames de coupe, d'éviter les casses de lame de coupe dans la pâte à pain lors de la scarification et de pouvoir remplacer aisément les lames de coupe usées par des lames de coupe neuves.

La publication FR 2 841 744 A1 de la demanderesse décrit un outil à scarifier qui a l'avantage d'être de grande qualité, ergonomique, sécurisé puisque son tranchant est protégé par un capuchon amovible, et de pouvoir être fabriqué à moindre coût afin de constituer un consommable pouvant être jeté lorsque la lame de coupe est émoussée.

Les outils à scarifier ont généralement une lame de coupe droite pourvue d'un tranchant rectiligne et réalisent des entailles droites. Lors de l'opération de scarification, le boulanger doit incliner plus ou moins l'outil par rapport à la verticale pour créer une entaille droite en biais dans la profondeur du pâton, ce qui a pour effet d'augmenter la profondeur et la qualité de la grigne et d'améliorer également l'aspect et la qualité de la croûte qui se forme lors de la cuisson du pain. Pour effectuer ce geste, la main du boulanger doit adopter une position qui n'est pas naturelle, en faisant une rotation du poignet, qui génère des tensions et induit des tendinites. Ces gestes répétés peuvent donc être la cause de troubles musculosquelettiques (TMS).

Le boulanger utilise également ces outils à scarifier pour décorer le dessus des viennoiseries, galettes, tourtes et autres produits similaires enrobés ou recouverts d'une pâte, en pratiquant délicatement des traits ou des lignes sur le dessus du produit, pour ne surtout pas traverser la pâte.

Ces différentes opérations de scarification du pain et de décoration de viennoiseries, galettes et autres sont toujours délicates et fastidieuses à réaliser avec des risques de coupure par contact avec la lame de coupe entre deux opérations de coupe ou lorsque l'outil de coupe est en attente sur un plan de travail. En effet, la lame de coupe est généralement similaire à une lame de rasoir, réalisée en métal de type acier inoxydable pour être compatible avec le domaine de la boulangerie. Ainsi, le tranchant de la lame de coupe est formé d'une arête vive formant un fil de coupe égal à zéro, c'est-à-dire sans épaisseur, donc particulièrement coupant.

En outre, les outils à scarifier, tels que celui décrit dans la publication de la demanderesse, sont particulièrement fins et plats. Ils sont l'avantage d'être ultra légers et peu chers. En contrepartie, ils sont difficiles à saisir notamment lorsqu'ils sont posés sur un plan de travail, nécessitant de les faire glisser jusqu'au bord du plan de travail pour arriver à les appréhender.

Les publications US 5 496 340 A et US 2014/157604 A1 concernent des scalpels utilisés dans des domaines autres que celui de la boulangerie, comportant un capuchon de protection coulissant entre une position fermée protégeant la lame de coupe et une position ouverte libérant la lame de coupe et faisant office de poignée. La lame de coupe est dans ces exemples confondue avec le plan médian longitudinal du capuchon. Cet ensemble de coupe ne permet donc pas de résoudre tous les problèmes évoqués ci-dessus, dont l'amélioration de l'ergonomie de travail dans le domaine spécifique de la boulangerie.

### Exposé de l'invention

La présente invention vise à pallier ces différents inconvénients en proposant d'une part un outil de coupe perfectionné facilitant grandement sa prise en main lorsqu'il est posé sur un plan de travail, et d'autre part un dispositif de protection qui constitue un accessoire amovible et réutilisable pour ledit outil de coupe, du type de celui connu de la publication de la demanderesse ou de tout autre outil de coupe équivalent, pour créer un ustensile de coupe ayant l'avantage de combiner plusieurs fonctions : sécurisation de l'outil de coupe lorsqu'il n'est pas utilisé en évitant tout risque de coupure, amélioration de la prise en main de l'outil de coupe par l'adjonction d'une poignée ergonomique, perfectionnement de l'ergonomie de travail en évitant les torsions du poignet pour effectuer les grignes, et optimisation du rangement de l'outil de coupe.

Dans ce but, l'invention concerne un outil de coupe comportant au moins un bossage prévu sur le manche, à distance de ladite lame de coupe, et s'étendant sur les faces recto et verso dudit manche pour faciliter la prise en main dudit outil de coupe sur un plan de travail.

Avantageusement, ledit outil de coupe est assemblé à un dispositif de protection et forme après assemblage un ustensile de coupe pourvu d'une poignée. Dans ce cas, ledit au moins un bossage prévu sur le manche dudit outil de coupe permet d'indexer les positions dudit dispositif de protection sur ledit outil.

Dans ce but, l'invention concerne également un dispositif de protection, comportant un corps creux longitudinal comportant une enveloppe extérieure et un logement intérieur traversant, ledit logement intérieur étant agencé pour recevoir ledit outil de coupe et former un ustensile de coupe, ledit dispositif de protection étant agencé pour être lié audit outil de coupe par une liaison coulissante à ajustement serré, de sorte que ledit dispositif de protection et ledit outil de coupe sont déplaçables relativement l'un par rapport à l'autre entre au moins une position fermée dans laquelle il recouvre ladite lame de coupe, et une position ouverte dans laquelle il dégage ladite lame de coupe et forme une poignée dudit ustensile de coupe, ledit dispositif de protection comportant au moins un plan médian longitudinal, et ledit logement intérieur comportant un rail de guidage longitudinal définissant une position de montage dudit outil de coupe, caractérisé en ce que ledit rail de guidage s'étend dans un plan incliné sécant dudit plan médian.

En variante, ledit logement peut comporter deux rails de guidage longitudinaux sécants définissant deux positions de montage dudit outil de coupe permettant l'utilisation dudit ustensile de coupe par un gaucher et un droitier. Les deux rails de guidage peuvent être perpendiculaires entre eux pour définir deux positions de montage dudit outil de coupe séparées d'un angle de 90°.

De préférence, ledit rail de guidage peut être défini par une diagonale d'un polygone, et préférentiellement par deux rainures symétriques.

Avantageusement, ledit plan incliné du rail de guidage et ledit plan médian du dispositif de protection sont séparés d'un angle compris entre 30 et 60° et préférentiellement sensiblement égal à 45°, de sorte à positionner ledit outil de coupe dans une position de coupe optimale évitant la torsion du poignet.

Préférentiellement, l'enveloppe extérieure présente une forme ergonomique et comporte à cet effet des empreintes en creux correspondant à des doigts d'une main, lesdites empreintes étant prévues sur une face latérale ou sur deux faces latérales opposées dudit dispositif de protection pour une meilleure préhension.

Optionnellement, le dispositif de protection peut comporter des aimants prévus sur au moins une de ses faces supérieure ou inférieure pour fixer ledit dispositif sur une surface métallique et faciliter son rangement.

Le but de l'invention est également atteint par un ustensile de coupe comportant un dispositif de protection agencé pour recevoir un outil de coupe par une liaison coulissante à ajustement serré, de sorte que ledit dispositif de protection et ledit outil de coupe sont déplaçables relativement l'un par rapport à l'autre entre au moins une position fermée dans laquelle le dispositif de protection recouvre ladite lame de coupe, et une position ouverte dans laquelle le dispositif de protection dégage ladite lame de coupe et forme une poignée dudit ustensile de coupe, ledit outil de coupe adoptant une position inclinée par rapport au plan médian dudit dispositif de protection, de sorte à positionner ledit outil de coupe dans une position de coupe optimale évitant la torsion du poignet.

Avantageusement, ledit dispositif de protection comporte un rail de guidage ayant une largeur sensiblement égale à la plus grande largeur dudit outil de coupe.

Ledit outil de coupe et ledit dispositif de protection peuvent comporter des moyens d'indexage au moins de ladite position ouverte dudit dispositif de protection, et ces moyens d'indexage pouvant comporter au moins ledit bossage prévu sur le manche dudit outil de coupe agencé pour coopérer avec une butée axiale prévue sur ledit dispositif de coupe.

Ledit dispositif de protection a de préférence une longueur inférieure à la longueur de l'outil de coupe et préférentiellement inférieure à la moitié de la longueur dudit outil de coupe.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] est une vue en perspective d'un dispositif de protection seul selon un premier mode de réalisation de l'invention,
[Fig 2] est une vue en coupe transversale du dispositif de la figure 1, suivant le plan de coupe II-II,
[Fig 3] est une vue en perspective d'un dispositif de protection seul selon un second mode de réalisation de l'invention,
[Fig 4] est une vue en coupe transversale du dispositif de la figure 3, suivant le plan de coupe IV-IV,
[Fig 5] est une vue en coupe longitudinale du dispositif de la figure 4, suivant le plan de coupe V-V,
[Fig 6] est une vue en perspective d'un ustensile de coupe obtenu par l'assemblage du dispositif de protection de la figure 3 et d'un outil de coupe selon un premier mode de réalisation de l'invention représenté à la figure 16, montrant le dispositif de protection en position fermée de stockage,
[Fig 7] est une vue similaire à la figure 6 de l'ustensile de coupe, montrant le dispositif de protection en position fermée,
[Fig 8] est une vue en coupe transversale de l'ustensile de coupe de la figure 7, suivant le plan de coupe VIII-VIII de la figure 7,
[Fig 9] est une vue similaire à la figure 7 de l'ustensile de coupe, montrant le dispositif de protection en position ouverte,
[Fig 10] est une vue en coupe transversale de l'ustensile de coupe de la figure 9, suivant le plan e coupe X-X de la figure 9,
[Fig 11] est une vue en perspective de l'ustensile de coupe de la figure 9 posé sur un plan de travail,
[Fig 12] est une vue en perspective de l'ustensile de coupe de la figure 11 en cours de scarification d'un pâton,
[Fig 13] est une vue en perspective d'un ustensile de coupe obtenu par l'assemblage du dispositif de protection de la figure 3 et d'un outil de coupe selon un second mode de réalisation de l'invention représenté à la figure 18,
[Fig 14] est une vue similaire à la figure 13 de l'ustensile de coupe, montrant le dispositif de protection en position fermée,
[Fig 15] est une vue similaire à la figure 14 de l'ustensile de coupe, montrant le dispositif de protection en position ouverte,
[Fig 16] est une vue en perspective d'un outil de coupe seul selon le premier mode de réalisation de l'invention,
[Fig 17] est une vue en plan de l'outil de coupe de la figure 16 posé sur un plan de travail,
[Fig 18] est une vue en perspective d'un outil de coupe seul selon le second mode de réalisation de l'invention, et
[Fig 19] est une vue en plan de l'outil de coupe de la figure 18 posé sur un plan de travail.

### Description des modes de réalisation

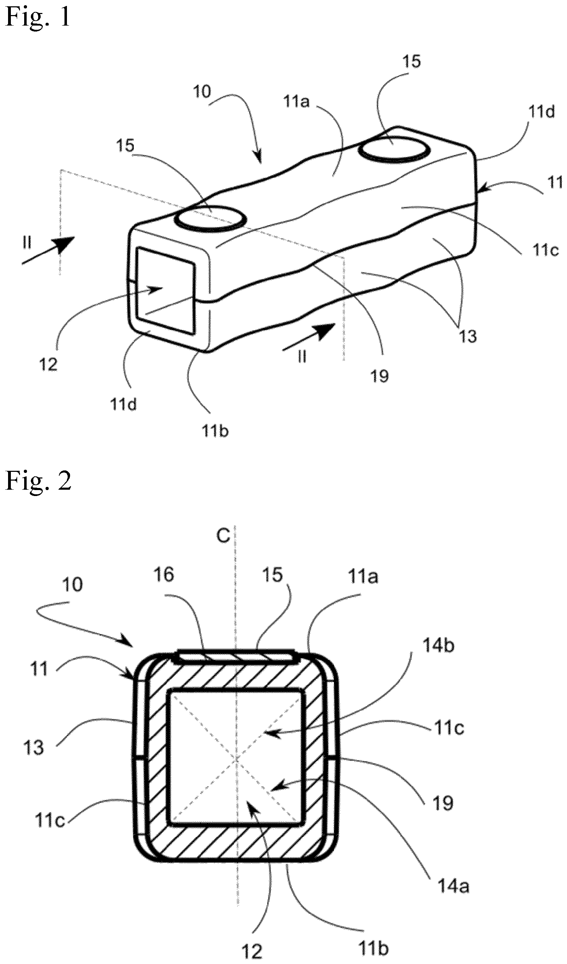

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé illustré à la figure 1. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

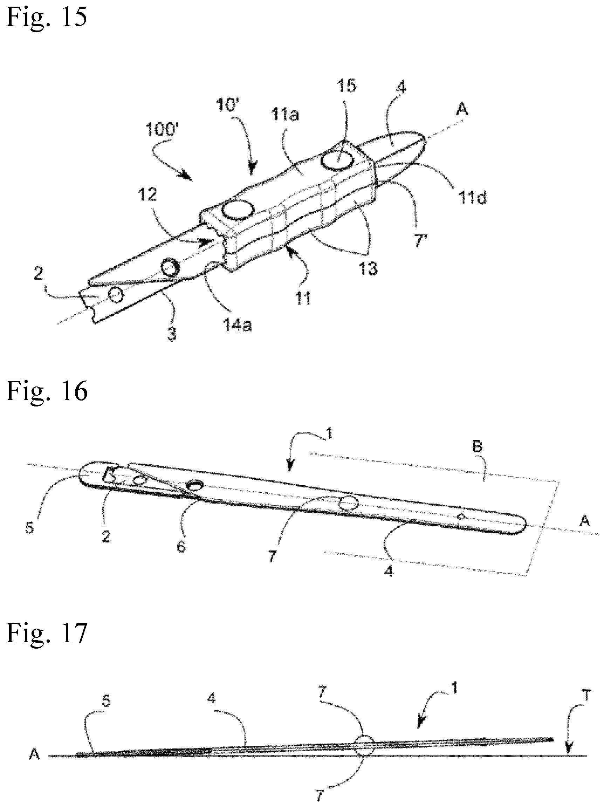

En référence aux figures, le dispositif de protection 10, 10' selon l'invention, également appelé par la suite « dispositif 10, 10' », est prévu pour être assemblé à un outil de coupe 1, 1', également appelé par la suite « outil 1, 1' ». L'outil 1, 1' peut être du genre de l'outil à scarifier des pâtons décrit dans la publication FR 2 841 744 A1 de la demanderesse, ou spécifique à la présente invention, tel qu'illustré dans les figures 16 à 19, ou encore tout autre outil de coupe compatible utilisable dans d'autres domaines techniques que celui de la boulangerie. L'assemblage du dispositif 10, 10' et de l'outil 1, 1' forme un nouvel ustensile de coupe 100, 100', également appelé par la suite « ustensile 100, 100' », particulièrement sécurisé et ergonomique.

En référence aux figures 16 à 19, l'outil de coupe 1, 1' comporte une lame de coupe 2 pourvue d'un tranchant 3 sur au moins un de ses bords longitudinaux, un manche 4 fin et plat, sensiblement rectiligne, et un capuchon 5 protégeant le tranchant 3 de la lame de coupe 2 lorsque l'outil 1, 1' est neuf. Le manche 4 est disposé dans le prolongement de la lame de coupe 2 et le capuchon 5 est relié au manche 4 par une charnière 6 sécable. L'outil 1, 1' est avantageusement obtenu par moulage, le manche 4 et le capuchon 5 étant surmoulés en partie à la lame de coupe 2. La matière utilisée est préférentiellement compatible avec le domaine alimentaire et peut être un polypropylène (PP) ou similaire, ou encore un biopolymère tel qu'un acide polylactique (PLA).

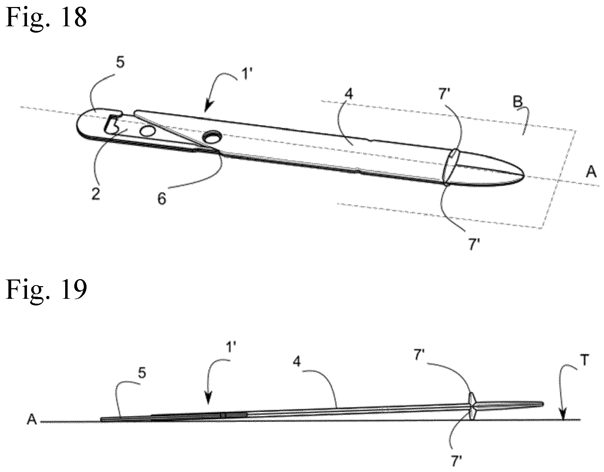

L'outil 1, 1' s'étend d'une manière générale selon un axe longitudinal A compris dans un plan B. L'outil 1, 1' selon l'invention comporte en outre un bossage 7, 7', positionné sur le manche 4, à distance de l'extrémité libre du manche 4 et de la lame de coupe 2. Ce bossage 7, 7' est double et s'étend sur les faces recto et verso du manche 4, rendant l'outil 1, 1' réversible. Le bossage 7, 7' peut présenter différentes formes, l'essentiel étant que cette forme soit en relief par rapport au manche 4 pour d'une part écarter l'outil d'un plan de travail sur lequel il est posé et faciliter sa préhension s'il est utilisé seul, et d'autre part créer une butée axiale avec le dispositif de protection 10, 10' s'il est assemblé audit outil. Dans les figures 16 et 17, le bossage 7 est situé dans une zone sensiblement médiane de l'outil 1 et présente une forme semi-cylindrique. Dans les figures 18 et 19, le bossage 7' est situé dans une zone proche de l'extrémité libre de l'outil 1 et présente une forme semi-discale. Le bossage 7, 7' remplit ainsi plusieurs fonctions : une fonction d'écarteur pour faciliter la prise en main de l'outil 1, 1' sur un plan de travail en surélevant le manche 4 de l'outil 1, 1' pour pouvoir le saisir facilement lorsqu'il est utilisé seul (figures 17 et 19), et une fonction d'indexage du ou des positions du dispositif de protection 10, 10' lorsqu'il est assemblé à l'outil 1, 1' comme expliqué ci-après.

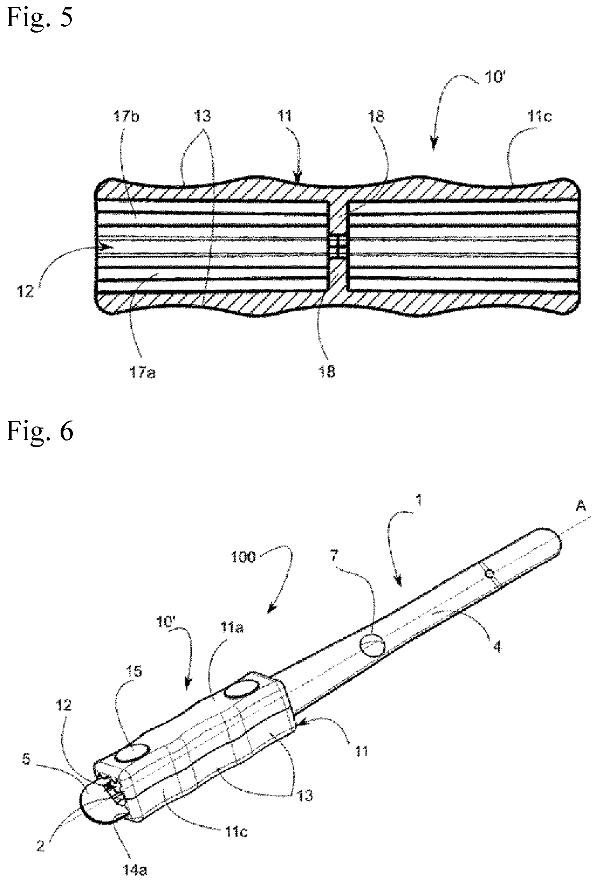

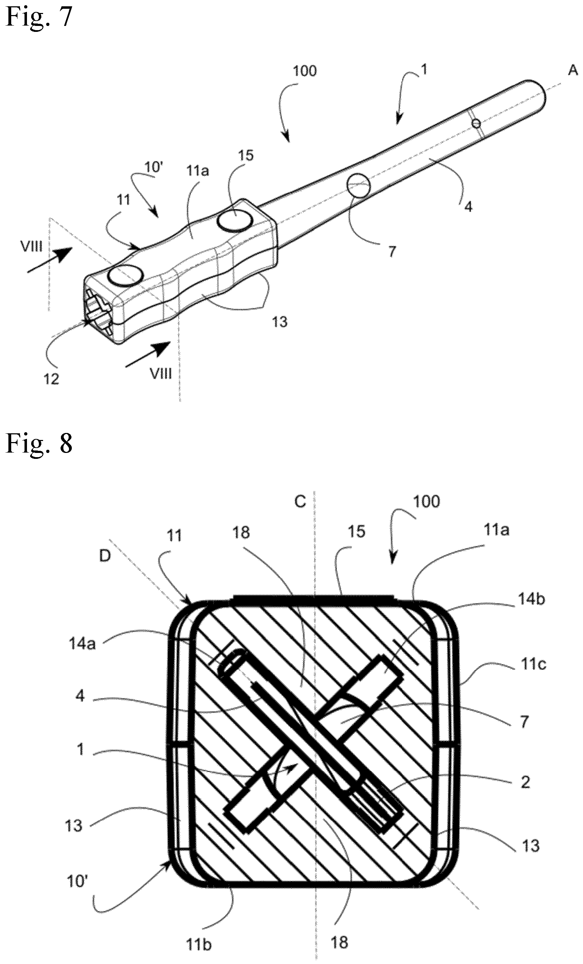

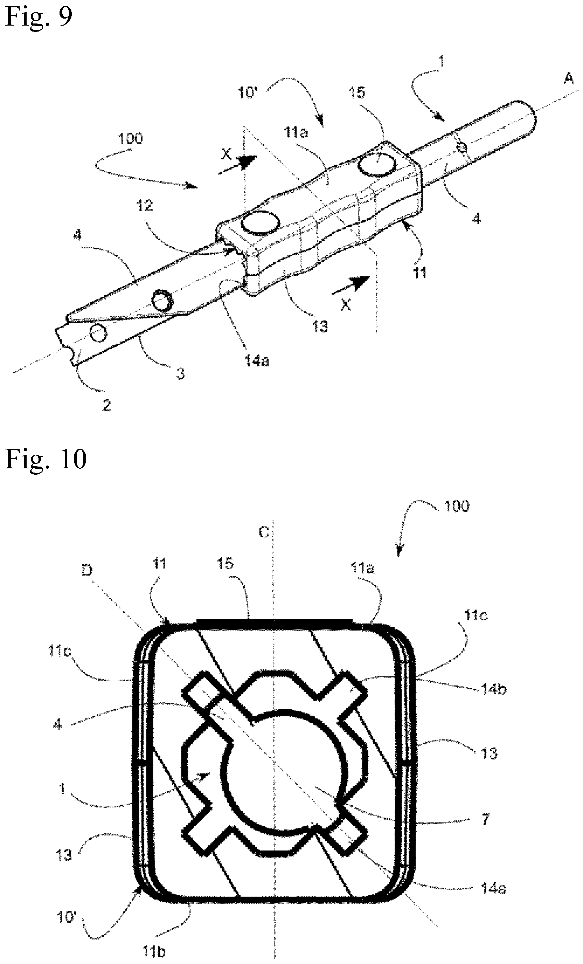

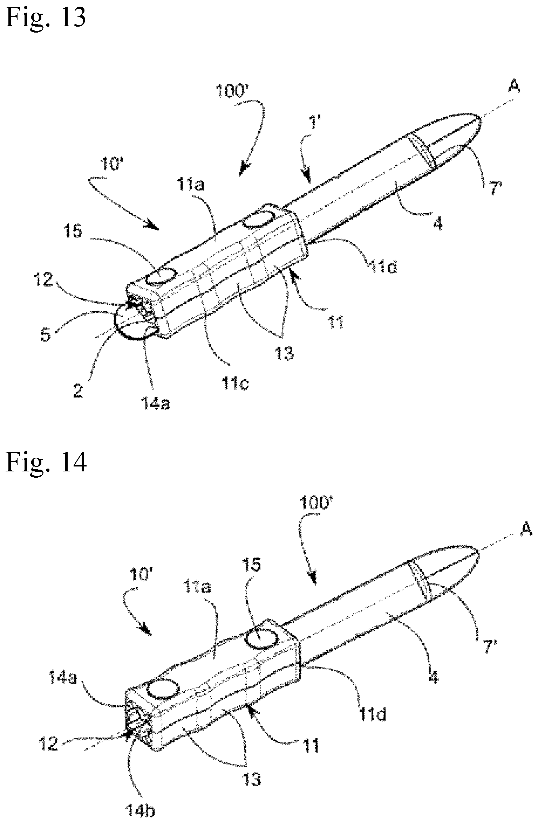

Le dispositif de protection 10, 10' constitue un accessoire amovible et réutilisable pour un outil de coupe 1, 1', lequel est généralement conçu pour être une pièce d'usure destinée à être jetée lorsque la lame de coupe 2 est émoussée. Le dispositif 10, 10' est agencé pour être assemblé à l'outil 1, 1' par un emboîtement axial et pour pouvoir être déplacé axialement ou longitudinalement dans un sens et dans l'autre relativement par rapport à l'outil 1, 1' entre différentes positions. Ces différentes positions peuvent être au moins une position de stockage (figures 6 et 13) dans laquelle il recouvre la lame de coupe 2 protégée par son capuchon 5 interdisant l'utilisation de l'outil 1, 1', une position fermée (figures 7 et 14) dans laquelle il recouvre la lame de coupe 2 dont le capuchon 5 a été retiré, interdisant également l'utilisation de l'outil 1, 1' et formant un capuchon de protection rétractable, et une position ouverte (figures 9 et 15) dans laquelle il découvre la lame de coupe 2 autorisant l'utilisation de l'outil 1, 1' et formant une poignée ergonomique pour l'ustensile de coupe 100, 100' facilitant sa prise en main ainsi que le positionnement correct de la lame de coupe 2 par rapport au pâton P pour réaliser des grignes G de qualité.

Le dispositif de protection 10, 10' est constitué d'un corps creux longitudinal, défini au moins par une longueur, une section, comportant une enveloppe extérieure 11 et un logement intérieur 12 traversant, dans lequel l'outil 1, 1' est introduit pour former un ustensile de coupe 100, 100'. Dans l'exemple représenté, le dispositif 10, 10' est tubulaire et assimilable à un manchon. Cependant, cet exemple n'est pas limitatif puisqu'il peut avoir une forme de tube partiel, ouvert en C, en U ou toute autre forme similaire, l'essentiel étant qu'il comporte les caractéristiques techniques suivantes.

Le dispositif 10, 10' présente une longueur inférieure à la longueur de l'outil 1, 1', de préférence inférieure à la moitié de la longueur de l'outil 1, 1', sans que ce rapport ne soit limitatif. Il peut s'étendre sur une longueur correspondant aux deux ou trois doigts centraux d'une main pour former avec le pouce une pince de préhension, sans que cette précision ne soit limitative.

Le dispositif 10, 10' présente une section générale sensiblement carrée, dont les arêtes extérieures sont de préférence arrondies pour le confort de la main. Il peut présenter toute autre section géométrique ou non, par exemple cylindrique, ovoïde, polygonale ou quelconque, dans la mesure où la section choisie est confortable pour la main du boulanger ou de tout autre utilisateur, et facilite la prise en main de l'ustensile 100, 100'.

Dans les exemples représentés, le dispositif 10, 10' comporte une enveloppe extérieure 11 de forme générale parallélépipédique définie par une face supérieure 11a, une face inférieure 11b, deux faces latérales 1 1c et deux extrémités 1 1d ouvertes sur le logement intérieur 12. L'enveloppe extérieure 11 présente une forme extérieure ergonomique. A cet effet, elle comporte des empreintes 13 pour des doigts, et plus précisément trois empreintes 13 en creux, alignées et contiguës, pouvant correspondre aux trois doigts centraux d'une main. Ces empreintes 13 sont prévues dans au moins une des faces latérales 11c du dispositif 10, et de préférence dans les deux faces latérales 11c du dispositif 10. Ainsi le dispositif 10 peut être maintenu d'une seule main en positionnant l'index et le majeur ou l'index, le majeur et l'annulaire sur l'une des faces latérales 11c et le pouce sur l'autre face latérale 11c. Les empreintes 13 sont disposées en opposition ou symétriquement par rapport à un plan médian C, qui correspond à un plan vertical lorsque le dispositif 10, 10' est assemblé à l'outil 1, 1' selon les figures 6 à 12. Le dispositif 10, 10' est par conséquent symétrique et réversible, et peut être maintenu indifféremment par une main droite ou une main gauche.

Dans les exemples représentés, le dispositif 10, 10' comporte un logement intérieur 12 agencé pour remplir plusieurs fonctions : une fonction de guidage longitudinal du dispositif 10, 10' par rapport à l'outil 1, 1' et inversement pour modifier la position relative du dispositif par rapport à l'outil, et une fonction de maintien en position de l'outil 1, 1' par rapport au dispositif 10, 10' pour utiliser l'ustensile de coupe 100, 100' de manière ergonomique et en toute sécurité. A cet effet, le logement intérieur 12 comporte au moins un rail de guidage 14a, 14b longitudinal définissant une position de montage de l'outil de coupe 1, 1'. Il comporte de préférence deux rails de guidage 14a et 14b longitudinaux sécants définissant deux positions de montage de l'outil 1, 1' sécantes. Dans les exemples représentés, les deux rails de guidage 14a et 14b sont perpendiculaires entre eux et définissent deux positions de montage de l'outil de coupe 1, 1' séparées d'un angle de 90°, sans que ces exemples ne soient limitatifs.

Dans l'exemple des figures 1 et 2, les rails de guidage 14a et 14b sont définis par les deux diagonales d'un carré qui correspond à la section du logement intérieur 12. Dans ce cas, les angles du logement intérieur 12 forment des moyens de guidage et de maintien de l'outil 1, 1'.

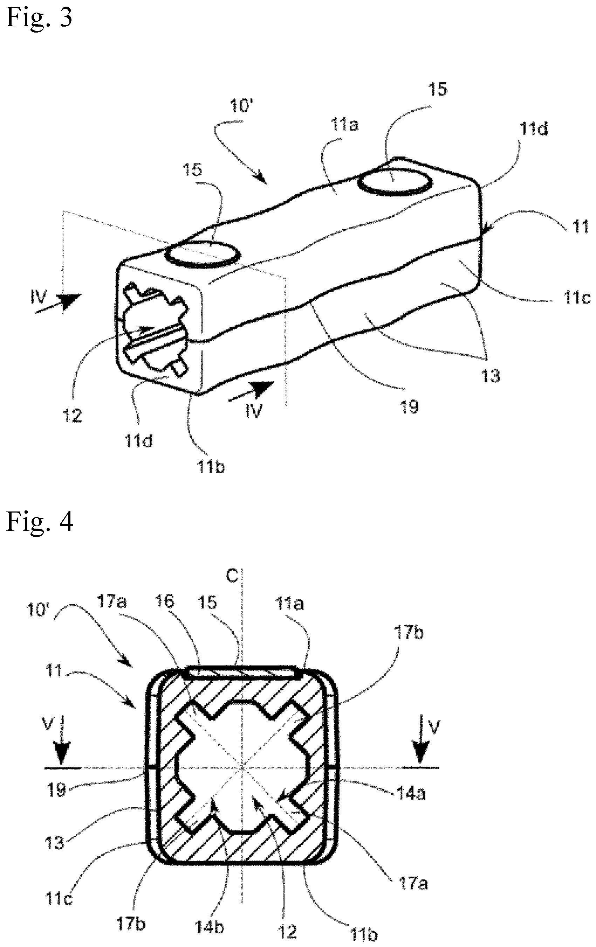

Dans l'exemple des figures 3 et 4, les rails de guidage 14a et 14b sont définis chacun par paire de rainures 17a et 17b symétriques. Dans ce cas, les rainures 17a et 17b formées dans le logement intérieur 12 forment des moyens de guidage et de maintien de l'outil 1, 1'. Cette forme de réalisation permet une meilleure tenue mécanique de l'outil 1, 1' par rapport à la forme de réalisation précédente.

Dans tous les cas, les rails de guidage 14a et 14b s'étendent chacun dans un plan incliné D sécant du plan médian C. L'angle d'inclinaison de chaque rail de guidage 14a et 14b est égal à 45° par rapport au plan médian C. Cet angle d'inclinaison peut varier par exemple entre 30° et 60° en fonction du cahier des charges de l'ustensile de coupe 100, 100'.

En outre, la symétrie du logement intérieur 12 par rapport au plan médian C permet de monter l'outil 1 dans l'un ou l'autre rail de guidage 14a et 14b indifféremment, et selon que le dispositif 10 est utilisé par un gaucher ou un droitier. En outre, la symétrie du dispositif 10, 10' par rapport à un plan médian horizontal perpendiculaire au plan médian C permet de l'utiliser dans un sens ou dans l'autre sens indifféremment, et il n'est pas utile de prévoir des moyens de détrompage. L'inclinaison de chaque rail de guidage 14a et 14b a l'avantage de positionner l'outil 1 dans une même inclinaison par rapport au plan médian C qui correspond à la verticale lorsque l'ustensile de coupe 100, 100' est utilisé. Les rails de guidage 14a et 14b ont une largeur sensiblement égale à la plus grande largeur de l'outil 1, 1', pour créer une liaison coulissante à ajustement serré entre l'outil 1, 1' et le dispositif 10, 10'. Cet ajustement serré permet le maintien par friction de l'outil 1, 1' dans le dispositif 10, 10' et inversement. Le dispositif 10, 10' et l'outil 1, 1' sont liés entre eux par friction pour la variante des figures 1 et 2, et par blocage dans les rainures 17a et 17b pour la variante des figures 3 et 4, sans autre système de maintien ou de blocage additionnel. Ils ne peuvent être déplacés l'un par rapport à l'autre d'une position à l'autre, ou séparés l'un de l'autre que par une action manuelle selon un mouvement tire-pousse dans le sens longitudinal selon l'axe A. Bien entendu, le logement intérieur 12 peut présenter toute autre section compatible, dans la mesure où elle permet la réception, le maintien par friction, l'inclinaison, et le coulissement relatif de l'outil 1, 1' par rapport au dispositif 10, 10'.

Le dispositif 10, 10' peut comporter en outre des organes de fixation du dispositif 10, 10' sur une surface. Dans les exemples illustrés, les organes de fixation sont magnétiques et comportent un ou plusieurs aimants 15, et par exemple deux aimants 15, positionnés chacun à proximité d'une extrémité 11d du dispositif 10, 10' sur sa face supérieure 11a. Il s'agit notamment d'aimants permanents sous la forme de pastilles, rapportés par collage par exemple dans un évidemment 16 correspondant prévu dans la face supérieure 11a du dispositif 10, 10'. Ils permettent la fixation du dispositif 10, 10' seul ou assemblé à un outil 1, 1' sur n'importe quelle surface métallique magnétique ou magnétisable. Bien entendu, tout autre organe de fixation compatible avec la destination du dispositif 10, 10' peut convenir.

Le dispositif de protection 10, 10' et l'outil de coupe 1, 1' peuvent comporter des moyens d'indexage d'au moins une des positions fermée ou ouverte dudit dispositif, et de préférence de la position ouverte pour sécuriser la position de travail de l'ustensile de coupe 100, 100'. Ces moyens d'indexage comportent d'une part le bossage 7, 7' prévu sur le manche 4 de l'outil 1, 1' et d'autre part une butée axiale du dispositif 10, 10' contre laquelle vient buter le bossage 7, 7'. Dans l'exemple des figures 16 et 17, le bossage 7 de l'outil de coupe 1 pénètre dans le logement intérieur 12 et rencontre une cloison intérieure 18 qui ferme en partie le logement intérieur 12, prévue sensiblement au centre du dispositif 10, 10'. La cloison intérieure 18 visible sur la figure 8 permet l'arrêt en translation axiale de l'outil 1 lorsque le dispositif 10, 10' est en position ouverte représentée à la figure 9. Dans l'exemple des figures 18 et 19, le bossage 7' de l'outil de coupe 7' ne peut pas pénétrer dans le logement intérieur 12 et rencontre l'extrémité 11d correspondante du dispositif 10, 10'. Cette extrémité 11d permet l'arrêt en translation axiale de l'outil 1' lorsque le dispositif 10' est en position ouverte représentée à la figure 15.

Le dispositif 10, 10' de l'invention peut être réalisé dans différentes matières et préférentiellement dans une matière synthétique ou composite, compatible avec le domaine alimentaire. Bien entendu, cette matière peut différer en fonction du cahier des charges de l'outil 1, 1' et de sa destination. A titre d'exemple, la matière synthétique compatible avec le domaine alimentaire peut être un polypropylène (PP) ou préférentiellement un élastomère thermoplastique (TPE) pour sa souplesse au toucher. Cette matière synthétique peut être renforcée ou non par des charges, telles que par exemple des fibres de verres ou toute autre charge équivalente, permettant d'augmenter sa tenue mécanique si nécessaire. La matière peut également être choisie parmi un biopolymère tel qu'un acide polylactique (PLA). Le dispositif 10, 10' peut être fabriqué par un procédé de moulage, ou tout procédé équivalent, en une seule pièce, ou en deux demi-pièces assemblées selon un plan de joint 19 par collage, thermo-soudure, ou similaire. Le plan de joint 19 peut correspondre au plan médian horizontal du dispositif 10, 10'.

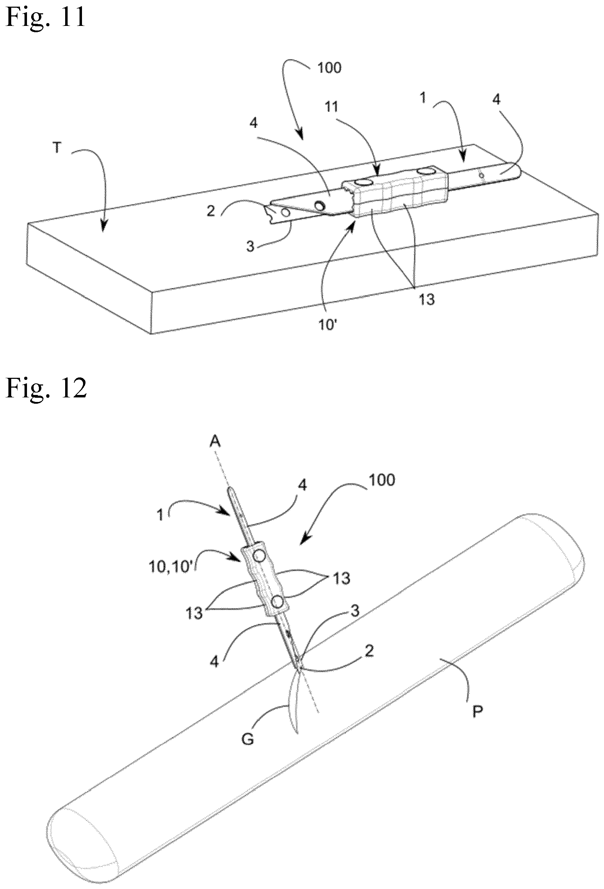

L'assemblage d'un outil 1, 1' et d'un dispositif 10, 10' forme un ustensile de coupe 100, 100' représenté à la figure 11 en position ouverte, posé sur un plan de travail T. Il repose sur le plan de travail T par une des faces du dispositif 10, 10', et dans l'exemple représenté, par sa face inférieure 11b, libérant les faces latérales 11c pourvues des empreintes 13 pour la préhension de l'ustensile 100, 100'. La présence du dispositif 10, 10' permet de surélever l'outil 1, 1' et sa lame de coupe 2 par rapport au plan de travail T, et d'améliorer considérablement la préhension de l'ustensile 100, 100' par le boulanger ou tout autre utilisateur. En outre, lorsqu'il est saisi par le boulanger, l'outil 1, 1' est naturellement incliné par rapport à la verticale d'un angle qui peut être égal à 45° sans que cette valeur ne soit limitative, permettant d'effectuer des grignes G dans un pâton P en gardant une position naturelle de la main, c'est-à-dire sans avoir à tourner le poignet (figure 12).

Le dispositif 10, 10' apporte par conséquent des fonctionnalités nouvelles à l'outil 1, 1' qui sont notamment la sécurisation de l'outil 1, 1' lorsqu'il est inutilisé entre deux opérations de coupe, en protégeant la lame de coupe 2 formant un capuchon rétractable lorsque le dispositif est en position fermée, la facilité de la prise en main de l'outil 1, 1' quel que soit l'endroit où il est entreposé, et l'amélioration de l'ergonomie de travail en inclinant automatiquement l'outil 1, 1' pour pratiquer des grignes G, sans rotation du poignet, lorsque le dispositif est en position ouverte.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles. Enfin, la destination du dispositif de protection, de l'outil de coupe correspondant et de l'ustensile de coupe obtenu n'est pas limitée au domaine de la boulangerie, mais s'étend à tout domaine technique nécessitant de pratiquer des entailles dans un corps mou.

## Revendications

1. Outil de coupe (1, 1'), notamment un outil à scarifier des pâtons, comprenant au moins une lame de coupe (2) et un manche (4) disposé dans le prolongement de ladite lame de coupe (2), **caractérisé en ce qu'**il comporte au moins un bossage (7, 7') prévu sur ledit manche (4) à distance de ladite lame de coupe (2), ledit au moins un bossage s'étendant sur les faces recto et verso dudit manche (4) pour faciliter la prise en main dudit outil de coupe sur un plan de travail.

2. Outil de coupe selon la revendication 1, **caractérisé en ce qu'**il est assemblé à un dispositif de protection (10, 10') selon l'une quelconque des revendications 3 à 10, et forme après assemblage un ustensile de coupe (100, 100') selon l'une quelconque des revendications 11 à 15 pourvu d'une poignée, ledit au moins un bossage (7, 7') permettant d'indexer les positions dudit dispositif de protection (10, 10') sur ledit outil.

3. Dispositif de protection (10, 10') pour un outil de coupe (1, 1') notamment un outil à scarifier des pâtons (P), ledit outil de coupe comportant une lame de coupe (2) et un manche (4) disposé dans le prolongement de ladite lame de coupe (2), ledit dispositif de protection (10, 10') comportant un corps creux longitudinal comportant une enveloppe extérieure (11) et un logement intérieur (12) traversant, ledit logement intérieur (12) étant agencé pour recevoir ledit outil de coupe (1, 1') selon l'une quelconque des revendications 1 et 2, et former un ustensile de coupe (100, 100') selon l'une quelconque des revendications 11 à 15, ledit dispositif de protection (10, 10') étant agencé pour être lié audit outil de coupe (1, 1') par une liaison coulissante à ajustement serré, de sorte que ledit dispositif de protection (10, 10') et ledit outil de coupe (1, 1') sont déplaçables relativement l'un par rapport à l'autre entre au moins une position fermée dans laquelle il recouvre ladite lame de coupe (2), et une position ouverte dans laquelle il dégage ladite lame de coupe (2) et forme une poignée dudit ustensile de coupe (100, 100'), ledit dispositif de protection (10, 10') comportant au moins un plan médian (C) longitudinal, et ledit logement intérieur (12) comportant un rail de guidage (14a, 14b) longitudinal définissant une position de montage dudit outil de coupe (1, 1'), **caractérisé en ce que** ledit rail de guidage (14a, 14b) s'étend dans un plan incliné (D) sécant dudit plan médian (C),

4. Dispositif de protection selon la revendication 3, **caractérisé en ce que** ledit logement intérieur (12) comporte deux rails de guidage (14a, 14b) longitudinaux sécants définissant deux positions de montage dudit outil de coupe (1, 1') permettant l'utilisation dudit ustensile de coupe par un gaucher et un droitier.

5. Dispositif de protection selon la revendication 4, **caractérisé en ce que** les deux rails de guidage (14a, 14b) sont perpendiculaires entre eux et définissent deux positions de montage dudit outil de coupe (1, 1') séparées d'un angle de 90°.

6. Dispositif de protection selon la revendication 3, **caractérisé en ce que** ledit rail de guidage (14a, 14b) est défini par une diagonale d'un polygone.

7. Dispositif de protection selon la revendication 3, **caractérisé en ce que** ledit rail de guidage (14a, 14b) est défini par deux rainures (17a, 17b) symétriques.

8. Dispositif de protection selon la revendication 3, **caractérisé en ce que** ledit plan incliné (D) du rail de guidage et ledit plan médian (C) du dispositif de protection sont séparés d'un angle compris entre 30 et 60° et préférentiellement sensiblement égal à 45°.

9. Dispositif de protection selon l'une quelconque des revendications 3 à 8, **caractérisé en ce que** ladite enveloppe extérieure (11) présente une forme ergonomique et comporte des empreintes (13) en creux correspondant à des doigts d'une main, lesdites empreintes (13) étant prévues sur une face latérale (11c) ou sur deux faces latérales (11c) opposées dudit dispositif de protection (10, 10').

10. Dispositif de protection selon l'une quelconque des revendications 3 à 9, **caractérisé en ce qu'**il comporte des aimants (15) prévus sur au moins une des faces supérieure ou inférieure (11a, 11b) dudit dispositif de protection (10, 10') agencés pour fixer ledit dispositif sur une surface métallique.

11. Ustensile de coupe (100, 100') comprenant au moins un outil de coupe (1, 1'), notamment un outil à scarifier des pâtons, pourvu d'une lame de coupe (2) et d'un manche (4) disposé dans le prolongement de ladite lame de coupe (2), **caractérisé en ce qu'**il comporte un dispositif de protection (10, 10') selon l'une quelconque des revendications 3 à 10, agencé pour recevoir ledit outil de coupe (1, 1') selon l'une quelconque des revendications 1 et 2, par une liaison coulissante à ajustement serré, de sorte que ledit dispositif de protection (10, 10') et ledit outil de coupe (1, 1') sont déplaçables relativement l'un par rapport à l'autre entre au moins une position fermée dans laquelle le dispositif de protection (10, 10') recouvre ladite lame de coupe (2), et une position ouverte dans laquelle le dispositif de protection (10, 10') dégage ladite lame de coupe (2) et forme une poignée dudit ustensile de coupe (100, 100'), ledit outil de coupe (1, 1') adoptant une position inclinée par rapport audit plan médian (C) dudit dispositif de protection (10, 10').

12. Ustensile de coupe selon la revendication 11, **caractérisé en ce que** ledit dispositif de protection (10, 10') comporte un rail de guidage (14a, 14b) ayant une largeur sensiblement égale à la plus grande largeur dudit outil de coupe (1, 1').

13. Ustensile de coupe selon l'une quelconque des revendications 11 et 12, **caractérisé en ce que** ledit outil de coupe (1, 1') et ledit dispositif de protection (10, 10') comportent des moyens d'indexage au moins de ladite position ouverte dudit dispositif de protection (10, 10').

14. Ustensile de coupe selon la revendication 13, **caractérisé en ce que** lesdits moyens d'indexage comportent ledit au moins un bossage (7, 7') prévu sur le manche (4) dudit outil de coupe (1, 1') coopérant avec une butée axiale (18, 11d) dudit dispositif de coupe (10, 10').

15. Ustensile de coupe selon l'une quelconque des revendications 11 à 14, **caractérisé en ce que** ledit dispositif de protection (10, 10') a une longueur inférieure à la longueur de l'outil de coupe (1, 1') et préférentiellement inférieure à la moitié de la longueur dudit outil de coupe (1, 1').
